# EUROPÄISCHE PATENTANMELDUNG

(11) **EP 2 660 666 A2**
(43) Veröffentlichungstag der Anmeldung: **06.11.2013**
(21) Anmeldenummer: 13162281.3
(22) Anmeldetag: 04.04.2013
(51) Int. Cl.: G05B 19/042

(54) **Touchpad als Interface und Codelesegerät zur Steuerung weiterer Geräte**

(30) Priorität: 02.05.2012 DE 102012008645
(71) Anmelder: Heidelberger Druckmaschinen AG, 69115 Heidelberg (DE)
(72) Erfinder: Mainka, Martin, 68766 Hockenheim (DE); Dr. Schmitt-Lewen, Martin, 69118 Heidelberg (DE); Sonnenschein, Joachim, 64367 Mühltal (DE); Weber, Alexander, 69469 Weinheim (DE); Dr. Beier, Bernard, 68526 Ladenburg (DE); Dr. Fergen, Immanuel, 76229 Karlsruhe (DE)

(57) **Zusammenfassung**

Die Erfindung betrifft eine Vorrichtung zur Behandlung eines Gegenstands mit einem Gerät (4) und mit einer Erfassungseinrichtung (3, 10). Die Erfindung zeichnet sich dadurch aus, dass die Erfassungseinrichtung (3,10) mit dem Gerät (4) über eine Kommunikationsverbindung (9) verbindbar ist und dazu vorgesehen ist, kapazitiv erfassbare mit dem Gegenstand mit gelieferte Daten zu erfassen und dass das Gerät (4) auf Basis der mit dem Gegenstand mitgelieferten Daten gesteuert wird.

## Beschreibung

Die vorliegende Erfindung betrifft eine Vorrichtung zur Behandlung eines Gegenstands mit einem Gerät und mit einer Erfassungseinrichtung.

Aus der Gebrauchsmusterschrift DE 20 2010 011 032 U1 sind ein Informationsträger und ein System zur Erfassung von Informationen bekannt. Bei dem Informationsträger handelt es sich um einen kapazitiven Informationsträger, welcher auf einem elektrisch nicht leitfähigen Substrat mindestens eine elektrisch leitfähige Schicht aufweist. Diese elektrisch leitfähige Schicht kann mit einem Touchscreen in Wechselwirkung treten und somit Signale an die Steuerung des Touchscreens abgeben. Derartige Touchscreens werden inzwischen bei vielen Geräten, wie z. B. Smartphones, Handys, Displays, Tablet-PCs, MP3-Playern und ähnlichen Geräten der Unterhaltungselektronik verwendet. Normalerweise werden Touchscreens per Finger bedient, wobei der Finger bei Berührung des Touchscreens an der Stelle eine Veränderung der elektrischen Kapazität verursacht, welche wiederum als Signal an die Touchscreen-Steuerung weitergegeben wird. In dem Gebrauchsmuster wird vorgeschlagen, den Touchscreen nicht nur zur Bedienung durch Finger einer Bedienperson zu verwenden, sondern einen Datenträger bereitzustellen, welcher von dem Touchscreen ausgelesen werden kann. Als Datenträger wird dabei bevorzugt ein Papier, ein Karton oder ein Kunststoff verwendet, welcher nicht leitend ist. Auf diesem nicht leitenden Substrat wird dann eine leitfähige Schicht aufgebracht, welche eine Struktur aufweist, die Informationen verschlüsselt enthält. Durch Auflage des Substrats mit der aufgebrachten elektrisch leitfähigen Schicht auf dem Touchscreen können die Informationen über den Touchscreen übertragen werden. Wenn der Touchscreen z. B. zu einem Smartphone oder Tablet-PC gehört, so kann auf dem Gerät Software installiert sein, welche die über den Touchscreen übertragenen und verschlüsselten Signale auswertet und anzeigt. Das Gerät mit dem Touchscreen kann wiederum mit dem Internet verbunden sein, wo die verschlüsselten Daten überprüft werden und verifiziert werden. Auf diese Art und Weise kann der Datenträger mit dem Substrat als eine Art Schlüssel benutzt werden, welcher einen Internetzugang freischaltet. Die in der Gebrauchsmusterschrift genannten Anwendungen beziehen sich jedoch ausschließlich auf die Verarbeitung von Daten.

Aus dem Patent US 7,328,347 B2 ist ein Verfahren zur sicheren Fernbedienung einer Maschine über das Internet bekannt. Hier muss der Bediener aber selbst die Eingaben tätigen, was zu falschen Eingaben führen kann.

Es ist Aufgabe der vorliegenden Erfindung, eine Vorrichtung zu schaffen, welche kapazitiv erfassbare Datenträger auch für andere Zwecke als die bloße Verarbeitung von Daten nutzen kann.

Diese Aufgabe wird erfindungsgemäß durch Patentanspruch 1 gelöst. Vorteilhafte Ausgestaltungen der Erfindung sind den Unteransprüchen und den Zeichnungen zu entnehmen. Gemäß der vorliegenden Erfindung ist vorgesehen, dass mit einem Gerät ein Gegenstand behandelt werden kann. Bei diesem Gerät kann es sich um ein beliebiges Produktionsgerät, insbesondere ein Haushaltsgerät, handeln. Dieses Gerät ist üblicherweise dazu vorgesehen, einen Gegenstand auf eine bestimmte Art und Weise zu behandeln. Wenn es sich bei dem Gerät z. B. um eine Mikrowelle handelt, so dient diese Mikrowelle dazu, Lebensmittel aufzutauen und zu erhitzen. Das Gerät ist mit einer Erfassungseinrichtung verbunden, welche kapazitive Datenträger erfassen kann. Das Gerät kann mit der Erfassungseinrichtung drahtlos oder über ein Kabel verbunden sein. Des Weiteren kann die Erfassungseinrichtung auch direkt im Gerät integriert sein. Die Erfassungseinrichtung ist ein Lesegerät wie z. B. ein Touchscreen, welcher den kapazitiven Datenträger auslesen kann.

Gemäß der vorliegenden Erfindung ist vorgesehen, dass der kapazitive Datenträger mit dem Gegenstand mit geliefert wird und Daten enthält, welche sich auf den gelieferten Gegenstand beziehen. So werden z. B. Tiefkühlprodukte wie Tiefkühlpizza üblicherweise in einem Karton geliefert, welcher mit entsprechenden Zubereitungshinweisen bedruckt ist. Bei der vorliegenden Erfindung ist es nun möglich, dass dieser Karton auch als kapazitiver Datenträger dient und die Verarbeitungshinweise kapazitiv auf dem Karton gespeichert sind. Der Verbraucher kann dann den Karton nach dem Auspacken der Pizza auf die Erfassungseinrichtung legen und somit automatisch die mit der Pizza mitgelieferten Daten auf das Gerät übertragen. Das Gerät kann dann automatisch oder nach Bestätigung der übertragenen Behandlungswünsche diese in der Steuerung umsetzen und den Gegenstand entsprechend behandeln. Auf diese Art und Weise können zuverlässig falsche Eingaben am Gerät und damit eine falsche Behandlung des Gegenstands vermieden werden. So kann z. B. bei einer Mikrowelle vermieden werden, dass eine falsche Temperatur oder eine falsche Behandlungsdauer ausgewählt wird und somit Lebensmittel beschädigt werden können.

In einer ersten Ausgestaltung der Erfindung ist vorgesehen, dass das Gerät den Gegenstand behandelt, welcher zusammen mit den Daten mitgeliefert wird. So kann der kapazitive Datenträger auf der Verpackung der Pizza dazu genutzt werden, die in der Verpackung gelieferte Pizza im Mikrowellengerät entsprechend zu behandeln. Es ist aber auch möglich, den Datenträger für weitere Gegenstände zu verwenden, um z. B. ähnliche oder gleiche Pizzen zu behandeln, welche in einem Karton geliefert werden, welcher keinen kapazitiven Datenträger enthält. In diesem Fall kann der alte Pizzakarton dazu verwendet werden, die Eingaben für die Behandlung einer weiteren Pizza automatisch vorzunehmen.

In einer besonders vorteilhaften Ausgestaltung der Erfindung ist vorgesehen, dass die Erfassungseinrichtung Bestandteil eines mobilen Kommunikationsgeräts ist, welches bevorzugt drahtlos mit dem Gerät zur Behandlung des Gegenstands kommuniziert. Dieses mobile Kommunikationsgerät kann ein Smartphone, Handy, Tablet-PC oder Ähnliches sein, welche üblicherweise über eine Touchscreen-Bedienoberfläche verfügen. Damit ist ein derartiges mobiles Kommunikationsgerät geeignet, einen kapazitiven Datenträger auszulesen. Bei dieser Ausgestaltung der Erfindung muss das Gerät zur Behandlung des Gegenstands selbst nicht über einen Touchscreen zur Erfassung des kapazitiven Datenträgers verfügen, es reicht vielmehr aus, wenn das mobile Kommunikationsgerät mit dem Gerät drahtlos kommunizieren kann. Zu diesem Zweck kann das Gerät selbst eine Empfangseinheit aufweisen, welche Datensignale von dem mobilen Kommunikationsgerät empfangen kann. Des Weiteren ist es aber auch möglich, dass das Gerät direkt oder indirekt, z. B. über WLAN an das Internet angeschlossen ist und das mobile Kommunikationsgerät drahtlos über das Internet direkt oder indirekt per WLAN mit dem Gerät kommuniziert. Der große Vorteil dieser Ausgestaltung liegt darin, dass das Gerät selbst eben nicht über einen Touchscreen verfügen muss, sondern lediglich dazu geeignet sein muss, Daten von einem mobilen Kommunikationsgerät auf den üblichen Wegen wie Internet oder drahtloser Datenfunkübertragung zu empfangen. Prinzipiell kann dazu jedes mobile Kommunikationsgerät genutzt werden, welches einen Touchscreen mit kapazitiver Erfassung aufweist. Auf das mobile Kommunikationsgerät selbst kann eine Software aufgebracht werden, welche die durch Auflage des kapazitiven Datenträgers auf den Touchscreen erzeugten Signale verarbeitet und z. B. übertragene Daten schon entschlüsselt und so die entschlüsselten Daten aufbereitet, dass sie an das Gerät übertragen und von diesem Gerät zur Behandlung des Gegenstands verwendet werden können. In diesem Fall muss das Gerät auch nicht selbst die Daten entschlüsseln, sondern erhält von dem mobilen Kommunikationsgerät bereits geeignet aufbereitete Daten.

In einer weiteren Ausgestaltung der Erfindung ist vorgesehen, dass die mitgelieferten Daten auf einer mit dem Gegenstand mitgelieferten Karte aufgebracht sind. Alternativ ist es möglich, dass die mitgelieferten Daten Bestandteil einer Verpackung des Gegenstands sind. Dies lässt sich am besten wiederum am Beispiel eines Pizzakartons beschreiben. So kann der Karton, welcher der Karte entspricht, selbst der Datenträger sein, d. h. die leitende Schicht zur kapazitiven Erfassung wird auf den Karton selbst aufgebracht und der Karton kann als Datenträger verwendet werden. Alternativ ist es aber auch möglich, einen separaten Datenträger wie z. B. eine Karte zu verwenden und diese Karte an der Verpackung zu befestigen oder in die Verpackung hineinzulegen. Auch auf diese Art und Weise können dann die Daten mit dem Gegenstand mitgeliefert werden.

In einer bevorzugten Ausgestaltung der vorliegenden Erfindung ist vorgesehen, dass die Daten auf die Karte oder Verpackung mittels Druckverfahren, insbesondere Offsetdruckverfahren, aufgebracht werden. Hinsichtlich der Aufbringung unterscheiden sich Karte und Verpackung nicht, so dass in beiden Fällen das gleiche Substrat zum Einsatz kommt und auch eine entsprechend gleiche Behandlung zur Aufbringung der Daten möglich ist. So können die Verpackungskartons z. B. in einer Offsetdruckmaschine mit den entsprechenden Aufdrucken versehen werden und zusätzlich in einem weiteren Druckwerk mit einer leitenden Druckfarbe die Datenstruktur auf der Verpackung aufgedruckt werden. Diese leitende Datenstruktur enthält dann die Daten, welche mit dem Gegenstand mitgeliefert werden.

In einer weiteren vorteilhaften Ausgestaltung der Erfindung ist vorgesehen, dass die Daten mittels eines Folientransferverfahrens auf der Karte aufgebracht werden. Dafür kommt z. B. die Kaltfolienprägung in Frage. Bei diesem Verfahren wird eine Folie auf den Bedruckstoff aufgebracht, welche ebenfalls leitend sein kann. Durch das Aufbringen einer leitenden Folie und entsprechendes Aufbringen von Strukturen können ebenfalls Informationen auf dem Bedruckstoff aufgebracht werden und dann als Datenträger verwendet werden. Es ist somit möglich, insbesondere im Kaltfolienprägeverfahren, Informationen auf einem Bedruckstoff aufzubringen, welcher dann kapazitiv ausgelesen werden kann.

Die vorliegende Erfindung wird nachfolgend anhand mehrerer Figuren näher beschrieben und erläutert. Es zeigen:
- Figur 1: eine Mikrowellengerät mit einer integrierten Leseeinheit zur Erfassung kapazitiver Datenträger,
- Figur 2: ein Mikrowellengerät mit einem separat angeschlossenen Lesegerät zur Erfassung kapazitiver Datenträger,
- Figur 3: ein Mikrowellengerät mit einem Empfangsmodul zur Kommunikation mit einem mobilen Kommunikationsgerät zur Erfassung kapazitiver Datenträger und
- Figur 4: ein Mikrowellengerät zur drahtlosen Kommunikation mit einem mobilen Kommunikationsgerät zur Erfassung von Verpackungen mit kapazitiven Daten.

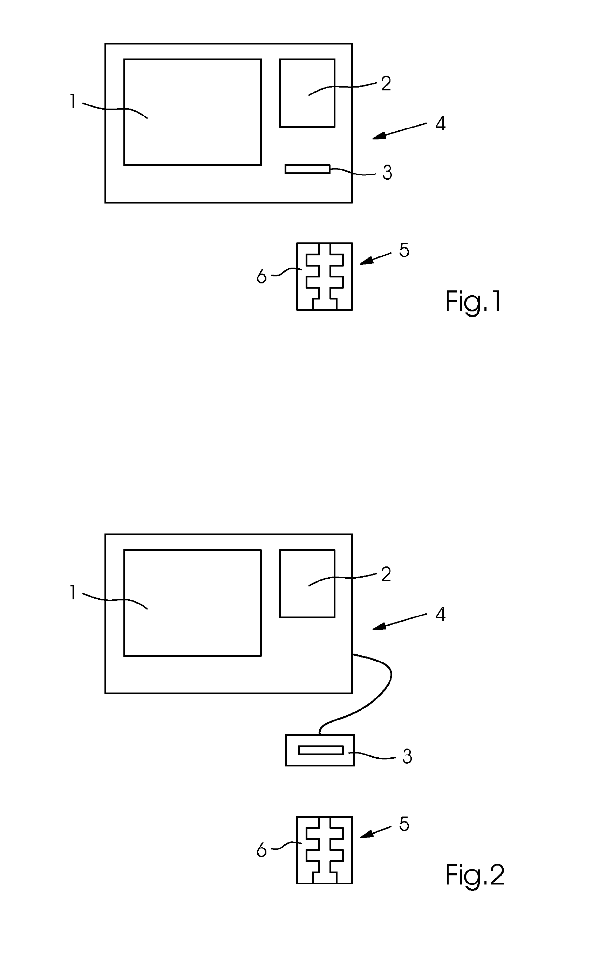

In Figur 1 ist ein Mikrowellengerät 4 gezeigt, welches zur Verarbeitung von Tiefkühlkost geeignet ist. Die Tiefkühlkost wird in einem Ofenbereich 1 erhitzt, wobei dieses Erhitzen entsprechend der verarbeiteten Teilkühlkost zu steuern ist. Üblicherweise werden dazu Temperatur und Behandlungszeit über ein Bedienfeld 2 eingegeben. Allerdings besteht bei der Nutzung eines Bedienfelds 2 die Gefahr, dass der Bediener eine falsche Eingabe tätigt und somit die Tiefkühlkost geschädigt wird. Aus diesem Grund weist das Mikrowellengerät 4 in Figur 1 eine integrierte Leseeinheit 3 auf, welche in der Lage ist, Karten 5 zu erfassen, auf denen kapazitiv erfassbare Daten gespeichert sind. Der Bediener muss also lediglich die Karte 5 in den Schlitz des Lesegeräts 3 stecken und die Daten der Karte 5 werden automatisch in das Mikrowellengerät 4 übertragen und steuern dann die Behandlung der Tiefkühlkost im Ofen 1. Die Karte 5 besteht im Wesentlichen aus Pappe, wobei auf der Karte 5 eine elektrisch leitende Struktur 6 aufgebracht ist, welche die Behandlungsinformationen der Tiefkühlkost enthält. Die leitende Schicht 6 mit den Daten kann z. B. mittels einer Offsetdruckmaschine auf gedruckt werden, so dass in hoher Stückzahl kostengünstig entsprechende Karten 5 hergestellt werden können. Auf diese Art und Weise können kostengünstig auch Verpackungen 11 mit einsprechenden leitenden Schichten 6 versehen werden, so dass die Verpackungen 11 entsprechende Informationen zur Behandlung von Tiefkühlkost enthalten.

In Figur 2 ist ebenfalls ein Mikrowellengerät 4 abgebildet, welches prinzipiell demjenigen aus Figur 1 ähnlich ist. Der Unterschied zu dem Mikrowellengerät 4 in Figur 1 liegt lediglich darin, dass die Leseeinheit 3 zur Erfassung des kapazitiven Datenträgers 5 nicht im Mikrowellengerät 4 selbst integriert ist, sondern über ein Kabel separat angeschlossen ist. Auf diese Art und Weise kann das Einlesen der Karten 5 erleichtert werden, insbesondere wenn die Karten 5 Bestandteil einer Verpackung 11 sind und entsprechend groß ausgeführt sind, so dass sie nicht in einen Leseschlitz passen würden. Wenn die Leseeinheit 3 separat angeordnet ist, ist es einfacher möglich, große Karten 5 oder ganze Verpackungen 11 damit zu erfassen. Außerdem ist es einfacher möglich, auf dem Markt befindliche Mikrowellengeräte 4 mit einem separaten Lesegerät 3 auszurüsten.

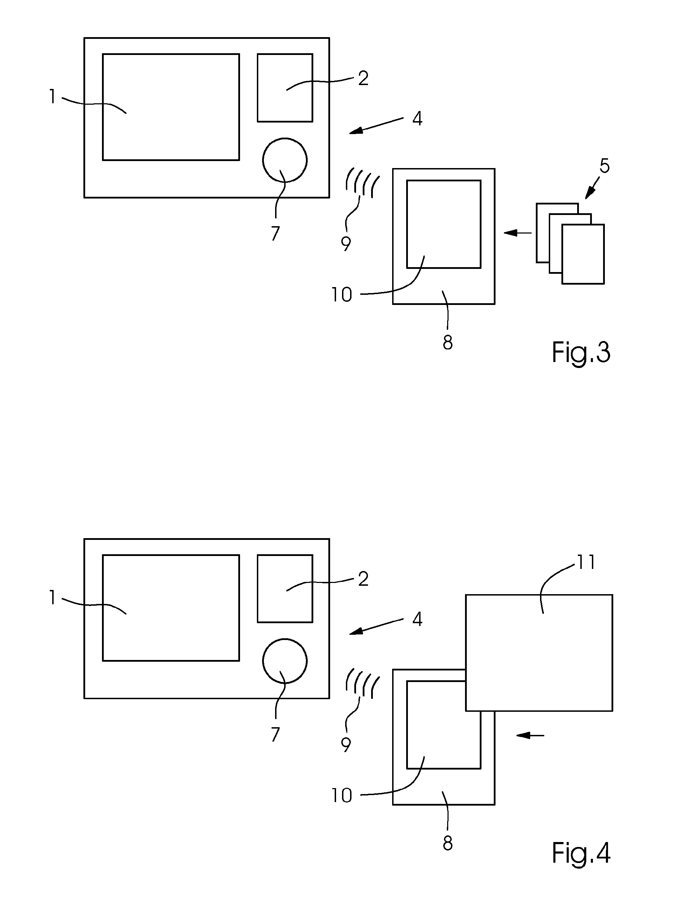

Eine besonders vorteilhafte Ausgestaltung der Erfindung ergibt sich aus Figur 3. Hier weist das Mikrowellengerät 4 überhaupt keine eigene Leseeinheit 3 auf, sondern verfügt über ein Empfangsmodul 7. Dieses Empfangsmodul 7 kann über WLAN, Bluetooth oder ähnlichen Datenfunk direkt mit einem mobilen Kommunikationsgerät 8 Daten austauschen, wobei es für die vorliegende Erfindung völlig ausreicht, wenn eine Ein-Weg-Kommunikation von dem mobilen Kommunikationsgerät 8 zu dem Empfangsmodul 7 des Mikrowellengeräts 4 möglich ist. Bei dem mobilen Kommunikationsgerät 8 kann es sich um ein Handy, Smartphone oder einen Tablet PC etc. handeln, welche üblicherweise ohnehin mit Datenfunk wie WLAN, Bluetooth, UMTS, LTE etc. ausgestattet sind. In diesem Fall wird der Touchscreen 10 des mobilen Kommunikationsgeräts 8 zur Erfassung der Karten 5 genutzt. Dazu werden die Karten 5 mit den Daten auf den Bildschirm 10 gelegt und eine entsprechende Software auf dem mobilen Kommunikationsgerät 8 dazu genutzt, die durch das Auflegen der Karte 5 erzeugten Signale des Touchscreen 10 zu verarbeiten. Die Software kann auch dazu genutzt werden, die aus der Karte 5 ausgelesenen Daten so umzuwandeln, dass sie unmittelbar nach Übertragung über die drahtlose Verbindung 9 an das Empfangsmodul 7 des Mikrowellengeräts 4 von dem Mikrowellengerät 4 verarbeitet werden können. Diese Ausgestaltung der Erfindung hat den großen Vorteil, dass das Mikrowellengerät 4 nicht selbst über einen Touchscreen 10 oder eine Leseeinheit 3 verfügen muss, sondern lediglich über eine Kommunikationsverbindung 9 mit dem mobilen Kommunikationsgerät 8 in Verbindung treten können muss. Auf diese Art und Weise können mit der vorliegenden Erfindung sämtliche Geräte und Maschinen angesteuert werden, welche über eine Kommunikationsverbindung z. B. einen Internetanschluss verfügen. Die vorliegende Erfindung ist somit nicht nur auf die Steuerung von Haushaltsgeräten wie eine Mikrowelle 4 begrenzt.

In Figur 4 werden anstelle der Karten 5 in Figur 3 dem mobilen Kommunikationsgerät 8 ganze Verpackungen 11 zugeführt. So kann z. B. ein kompletter Pizzakarton 11 auf den Touchscreen 10 des mobilen Kommunikationsgeräts 8 gelegt werden, so dass die auf der Verpackung 11 aufgebrachten Daten kapazitiv über den Touchscreen 10 ausgelesen und über die drahtlose Kommunikationsverbindung 9 an das Empfangsmodul 7 des Mikrowellengeräts 4 übertragen werden können. Die auf der Karte 5 bzw. Verpackung 11 gespeicherten Informationen können dabei unterschiedlicher Art sein. Je nachdem wie viele Daten aufgebracht werden, können entweder die Behandlungshinweise für die Pizza selbst aufgebracht sein oder es werden entsprechende Codes aufgebracht, welche dann das mobile Kommunikationsgerät 8 oder das Mikrowellengerät 4 selbst mit abgespeicherten Codes vergleicht und die zu den abgespeicherten Codes passenden Behandlungshinweise auswählt. Alternativ ist es auch möglich, dass das mobile Kommunikationsgerät 8 die erfassten Daten zunächst über das Internet an einen Server schickt und dieser die Daten dann auswertet und entsprechende Verarbeitungsschritte auswählt und an das mobile Kommunikationsgerät 8 zurück überträgt, welches diese dann wiederum über die drahtlose Verbindung 9 an das Mikrowellengerät 4 sendet. Die leitende Schicht mit den Informationen selbst kann auf der Verpackung 11 oder der Karte 5 sichtbar aufgedruckt werden oder integriert sein, indem die leitende Schicht wiederum überdruckt oder einlaminiert wird. Dabei kann der Code insbesondere in Form eines elektrischen Barcodes aufgebracht werden, welcher von dem Touchscreen 10 bzw. dem Lesegerät 3 kapazitiv erfasst werden kann. Die Datenträger 5, 11 mit dem kapazitiv erfassbaren Barcode sowie die Lesegeräte 3, 8 bilden dann ein aufeinander abgestimmtes System, welches eine zuverlässige verwechslungssichere und automatische Datenübertragung vom Datenträger 5, 11 an die Leseeinheit 3, 8 und das zu steuernde angeschlossene Gerät 4 erlaubt. Somit ist eine komfortable und sichere Bedienung des Geräts 4 möglich. Zur Visualisierung der Kompatibilität zwischen Lesegerät 3 bzw. mobilem Kommunikationsgerät 8 und Karten 5 sind diese mit einem eindeutigen Logo gekennzeichnet, welches auf den Karten 5 bzw. der Verpackung 11 und auf dem Lesegerät 3aufgebracht ist bzw. mittels der Software des mobilen Kommunikationsgeräts 8 auf dessen Touchscreen 10 angezeigt wird. So kann der Verbraucher schon beim Erwerb eines Produkts auf der Verpackung 11 erkennen, dass dieses Produkt mit dem System kompatibel ist.

**Bezugszeichenliste**

| | |
|---|---|
| 1 | Ofenbereich |
| 2 | Bedienfeld |
| 3 | Leseeinheit |
| 4 | Mikrowellengerät |
| 5 | Karte |
| 6 | leitende Schicht |
| 7 | Empfangsmodul |
| 8 | mobiles Kommunikationsgerät |
| 9 | drahtlose Verbindung |
| 10 | Touchscreen |
| 11 | Verpackung |

## Patentansprüche

1. Vorrichtung zur Behandlung eines Gegenstands mit einem Gerät (4) und mit einer Erfassungseinrichtung (3, 10),
**dadurch gekennzeichnet,**
**dass** die Erfassungseinrichtung (3,10) mit dem Gerät (4) über eine Kommunikationsverbindung (9) verbindbar ist und dazu vorgesehen ist, kapazitiv erfassbare mit dem Gegenstand mit gelieferte Daten zu erfassen und dass das Gerät (4) auf Basis der mit dem Gegenstand mitgelieferten Daten gesteuert wird.

2. Vorrichtung nach Anspruch 1,
**dadurch gekennzeichnet,**
**dass** das Gerät (4) den Gegenstand behandelt, welcher zusammen mit den Daten mitgeliefert wird.

3. Vorrichtung nach Anspruch 1 oder 2,
**dadurch gekennzeichnet,**
**dass** die Erfassungseinrichtung (3) Bestandteil des Geräts (4) ist.

4. Vorrichtung nach Anspruch 1 oder 2,
**dadurch gekennzeichnet,**
**dass** die Erfassungseinrichtung (10) Bestandteil eines mobilen Kommunikationsgerätes (8) ist, welches bevorzugt drahtlos mit dem Gerät (4) zur Behandlung des Gegenstands kommuniziert.

5. Vorrichtung nach Anspruch 4,
**dadurch gekennzeichnet,**
**dass** die Erfassungseinrichtung (10) des mobilen Kommunikationsgeräts (8) der Touchscreen zur Bedienung des mobilen Kommunikationsgerätes ist.

6. Vorrichtung nach einem der vorangehenden Ansprüche,
**dadurch gekennzeichnet,**
**dass** die mitgelieferten Daten auf einer mit dem Gegenstand mitgelieferten Karte (5) aufgebracht sind.

7. Vorrichtung nach Anspruch 6,
**dadurch gekennzeichnet,**
**dass** die Karte (5) mit den mitgelieferten Daten Bestandteil einer Verpackung (11) des Gegenstands ist, insbesondere dass die Karte mit den mitgelieferten Daten der Karton der Verpackung ist.

8. Vorrichtung nach Anspruch 6 oder 7,
**dadurch gekennzeichnet,**
**dass** die Daten auf die Karte (5) mittels Druckverfahren, insbesondere Offsetdruckverfahren, aufgebracht werden.

9. Vorrichtung nach Anspruch 6 oder 7,
**dadurch gekennzeichnet,**
**dass** die Daten mittels eines Folientransferverfahrens auf der Karte (5) aufgebracht werden.

10. Vorrichtung nach einem der vorherigen Ansprüche,
**dadurch gekennzeichnet,**
**dass** das zu steuernde Gerät (4) ein Haushaltsgerät ist.
